# EUROPEAN PATENT SPECIFICATION

(11) **EP 4 144 002 B1**
(45) Date of publication and mention of the grant of the patent: **23.07.2025**
(21) Application number: 21740483.9
(22) Date of filing: 05.07.2021
(51) Int. Cl.: H04L 67/1087, G06Q 20/02, H04L 67/02

(54) **CONNECTING TO THE BLOCKCHAIN NETWORK**
VERBINDUNG MIT EINEM BLOCKCHAIN-NETZWERK
RACCORDEMENT AU RÉSEAU DE CHAÎNE DE BLOCS

(30) Priority: 05.08.2020 GB 202012134
(43) Date of publication of application: 08.03.2023
(73) Proprietor: nChain Licensing AG, 6300 Zug (CH)
(72) Inventor: TARTAN, Chloe, London W1W 8AP (GB); WRIGHT, Craig Steven, London W1W 8AP (GB)
(74) Representative: Page White Farrer
(86) International application number: PCT/EP2021/068457
(87) International publication number: WO 2022/028791

(56) References cited:
- WO-A1-2019/133578
- KR-B1- 102 012 757
- US-A1- 2015 324 764
- US-A1- 2020 005 292

## Description

### TECHNICAL FIELD

The present disclosure relates to improving the connectivity of users (or other entities) to the blockchain network.

### BACKGROUND

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain comprises a chain of blocks of data, wherein each block comprises one or more transactions. Each transaction, other than so-called "coinbase transactions", points back to a preceding transaction in a sequence which may span one or more blocks going back to one or more coinbase transactions. Coinbase transactions are discussed further below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at some nodes, and the publication of blocks can be achieved through the publication of mere block headers.

The transactions in the blockchain may be used to for one or more of the following purposes: to convey a digital asset (i.e. a number of digital tokens), to order a set of entries in a virtualised ledger or registry, to receive and process timestamp entries, and/or to time-order index pointers. A blockchain can also be exploited in order to layer additional functionality on top of the blockchain. For example blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in more detail later. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction comprises one or more inputs and one or more outputs. Any spendable output comprises an element specifying an amount of the digital asset that is derivable from the proceeding sequence of transactions. The spendable output is sometimes referred to as a UTXO ("unspent transaction output"). The output may further comprise a locking script specifying a condition for the future redemption of the output. A locking script is a predicate defining the conditions necessary to validate and transfer digital tokens or assets. Each input of a transaction (other than a coinbase transaction) comprises a pointer (i.e. a reference) to such an output in a preceding transaction, and may further comprise an unlocking script for unlocking the locking script of the pointed-to output. So consider a pair of transactions, call them a first and a second transaction (or "target" transaction). The first transaction comprises at least one output specifying an amount of the digital asset, and comprising a locking script defining one or more conditions of unlocking the output. The second, target transaction comprises at least one input, comprising a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

US2020/005292A1 discloses techniques for accessing and storing blockchain data. A client computer system submits a blockchain-agnostic request to a computing resource service provider and the service provider processes the request.

WO2019/133578A1 discloses a distributed ledger and transaction computing network fabric over which large numbers of transactions are processed concurrently.

KR102012757B1 discloses a web session-based blockchain-linked service which provides a variety of public blockchain-based services to a user to be used on a web session through a service providing system having a web service providing server and a blockchain node server integrated linked thereto.

US2015/324764A1 discloses a system of enabling a user to transact using cryptocurrency of a value defined in relation to a different medium of exchange or financial instrument.

### SUMMARY

Users (and other types of parties, e.g. organisations, autonomous entities, etc.) typically connect directly with one or more blockchain nodes of the blockchain network. That is, a user operating a client application can connect with a blockchain node in order to e.g. submit a transaction to the network, obtain a transaction from the blockchain, query for the existence of specific unspent transaction outputs (UTXOs) etc. In order to carry out these operations a reliable connection between the user and the node(s) is required. It would therefore be desirable to boost connectivity between users and nodes in order to ensure a reliable connection to the blockchain network is maintained.

For instance, consider a scenario in which a user (say Alice) operating a lightweight client application attempts to submit a transaction to the blockchain network, or query the existence of one or more UTXOs that another user (say Bob) is attempting to assign to Alice, e.g. in return for goods or services. If Alice cannot connect to the blockchain network she is unable to send the transaction, or she may be unable to verify that Bob is not attempting to double-spend UTXOs that have already been referenced by an already validated transaction. Of course, this is case-dependent as there are other ways to verify UTXOs depending on whether additional information is available (e.g. a Merkle path of the UTXO). Alice may be unable to connect to a blockchain node due to an issue with the connection to the node itself, or because the node to which Alice ordinarily connects is no longer acting as a node on the network.

According to one aspect disclosed herein, there is provided a computer-implemented method of transmitting blockchain transactions to a blockchain network, wherein the method is performed by a first party and comprises: transmitting at least part of a blockchain transaction to an internet server via an internet service hosted by the internet server, wherein the internet server is configured to connect to one or more nodes of the blockchain network, and to transmit a blockchain transaction to the one or more blockchain nodes, wherein the transmitted blockchain transaction comprises the at least part of the blockchain transaction; and receiving, from the internet server via the internet service, a list of contacts, which are other parties associated with the first party, wherein for each contact in the list, the list comprises a respective one or more blockchain addresses associated with that contact. According to another aspect disclosed herein, there is provided a computer-implemented method of transmitting blockchain transactions to a blockchain network, wherein the method is performed by an internet server configured to connect to one or more blockchain nodes and comprises: receiving, from a first party via an internet service hosted by the internet server, at least part of a blockchain transaction; transmitting a blockchain transaction to the one or more blockchain nodes, wherein the blockchain transaction comprises the at least part of the blockchain transaction; maintaining a list of, which are other parties associated with the first party, wherein the list of contacts comprises, for each contact, one or more blockchain addresses associated with that contact; and transmitting the list of contacts to the first party.

The first party (e.g. Alice) forms a connection to an internet server (e.g. a web server or a mail server) that is connected to one or more blockchain nodes. Alice therefore does not need to be connected directly to the blockchain network, and instead can exploit the internet server which may have a permanent connection to one or more nodes. The internet server acts as a gateway between Alice and the blockchain network. Rather than Alice having to rely on her connection(s) to the network, Alice can utilise the internet server which may maintain many respective connections to different nodes. If the server is experiencing an issue with one or more particular connections, or one or more of the nodes have dropped off the blockchain network, the server can instead route Alice's transaction to the network via one or more different nodes.

In some instances, the internet server may maintain a permanent connection to the blockchain network via at least one node, e.g. by maintaining a connection to the same node over a given period, or by maintaining connections to different nodes at different points over that period.

In some embodiments, the internet service may be a web page such as a social media site or the like. The web page may have an embedded function configured to receive or generate one or more components of a transaction, e.g. a signature generated using Alice's private key. The transaction component(s) or a complete transaction are then sent to the server hosting the web page, which then forwards the transaction to the blockchain network. Depending on the particular set up, the server may generate the transaction itself, e.g. by filling in a transaction template with the components supplied to or generated by the web page.

In other embodiments, the internet service may be a mail service, i.e. an email application. The email application may also have an embedded function that allows users to interact with the blockchain network from within the application. As detailed below, the mail server hosting the email application may maintain a list of peers (contacts) linked with or otherwise known to Alice that also operate a blockchain client application. A respective public key or blockchain address (e.g. a public key hash) may be stored in association with Alice's contacts. This may be used to indicate to Alice which of her contacts she can assign her digital assets to, and to which blockchain address of her contacts to use in order to do so. Note that these examples apply similarly to the web page implementations mentioned above.

### BRIEF DESCRIPTION OF THE DRAWINGS

To assist understanding of embodiments of the present disclosure and to show how such embodiments may be put into effect, reference is made, by way of example only, to the accompanying drawings in which:
Figure 1 is a schematic block diagram of a system for implementing a blockchain,
Figure 2 schematically illustrates some examples of transactions which may be recorded in a blockchain,
Figure 3A is a schematic block diagram of a client application,
Figure 3B is a schematic mock-up of an example user interface that may be presented by the client application of Figure 3A,
Figure 4 is a schematic block diagram of an example system for implementing embodiments of the invention,
Figure 5 schematically illustrates the flow of a blockchain transaction from a user to the blockchain network according to embodiments of the invention,
Figure 6 is a sequence diagram illustrating an example embodiment of the invention, and
Figure 7 is a sequence diagram illustrating a different example embodiment of the invention.

### DETAILED DESCRIPTION OF EMBODIMENTS

### EXAMPLE SYSTEM OVERVIEW

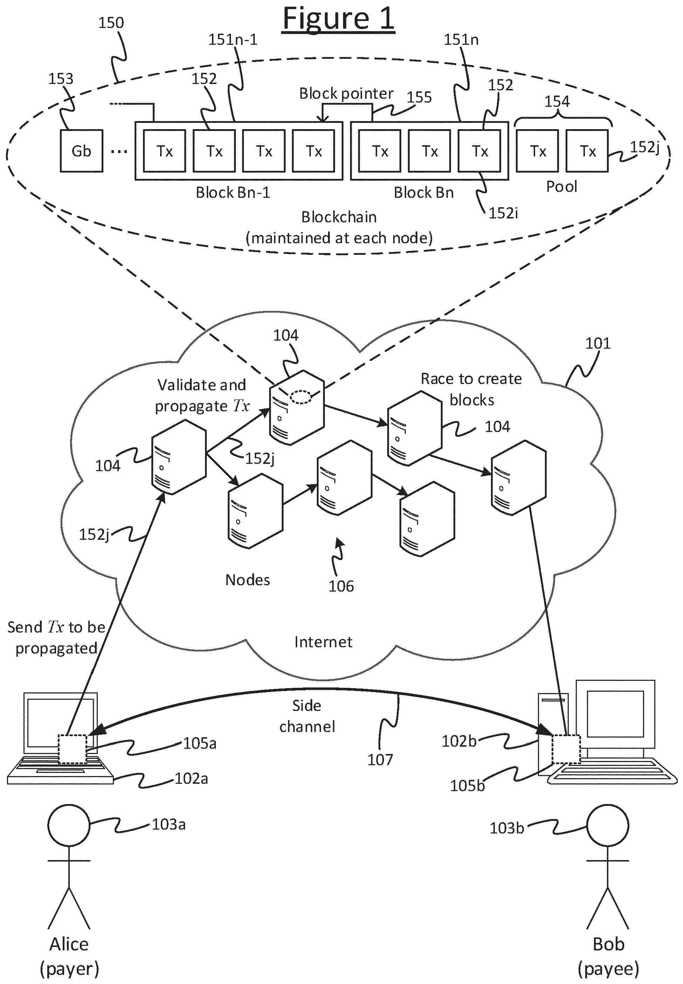

Figure 1 shows an example system 100 for implementing a blockchain 150. The system 100 may comprise of a packet-switched network 101, typically a wide-area internetwork such as the Internet. The packet-switched network 101 comprises a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 comprises computer equipment of a peer, with different ones of the nodes 104 belonging to different peers. Each blockchain node 104 comprises processing apparatus comprising one or more processors, e.g. one or more central processing units (CPUs), accelerator processors, application specific processors and/or field programmable gate arrays (FPGAs), and other equipment such as application specific integrated circuits (ASICs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of blockchain nodes 104 in the distributed or blockchain network 106. As mentioned above, maintaining a copy of the blockchain 150 does not necessarily mean storing the blockchain 150 in full. Instead, the blockchain 150 may be pruned of data so long as each blockchain node 150 stores the block header (discussed below) of each block 151. Each block 151 in the chain comprises one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 comprises at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also comprises a block pointer 155 pointing back to the previously created block 151 in the chain so as to define a sequential order to the blocks 151. Each transaction 152 (other than a coinbase transaction) comprises a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set (or "pool") 154 of transactions 152 waiting to be incorporated into blocks 151. The ordered pool 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input comprises a pointer referencing the output of a preceding transaction 152i in the sequence of transactions, specifying that this output is to be redeemed or "spent" in the present transaction 152j. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also comprises the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when a party 103, such as an individual user or an organization, wishes to enact a new transaction 152j (either manually or by an automated process employed by the party), then the enacting party sends the new transaction from its computer terminal 102 to a recipient. The enacting party or the recipient will eventually send this transaction to one or more of the blockchain nodes 104 of the network 106 (which nowadays are typically servers or data centres, but could in principle be other user terminals). It is also not excluded that the party 103 enacting the new transaction 152j could send the transaction directly to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may comprise checking that the cryptographic signature or other authorisation of the party 103 included in the input of the new transaction 152j matches a condition defined in the output of the preceding transaction 152i which the new transaction assigns, wherein this condition typically comprises at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned (e.g. spent) is whether it has yet been validly redeemed by the input of another, onward transaction 152j according to the blockchain node protocol. Another condition for a transaction to be valid is that the output of the preceding transaction 152i which it attempts to redeem has not already been redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered pool 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this comprises searching for a "nonce" value such that when the nonce is concatenated with a representation of the ordered pool of pending transactions 154 and hashed, then the output of the hash meets a predetermined condition. E.g. the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. The significant amount of effort, for example in the form of hash, required to create a proof-of-work solution signals the intent of the first node 104 to follow the rules of the blockchain protocol. Such rules include not accepting a transaction as valid if it assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the pool of yet-to-be published transactions 154 at any given time, depending on when they started searching for a solution or the order in which the transactions were received. Whoever solves their respective puzzle first defines which transactions 152 are included in the next new block 151n and in which order, and the current pool 154 of unpublished transactions is updated. The blockchain nodes 104 then continue to race to create a block from the newly-defined ordered pool of unpublished transactions 154, and so forth. A protocol also exists for resolving any "fork" that may arise, which is where two blockchain nodes104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to newly assign an additional, accepted amount of the digital asset in a new special kind of transaction which distributes an additional defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction" or "generation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "mining fee", and is discussed blow.

Due to the resources involved in transaction validation and publication, typically at least each of the blockchain nodes 104 takes the form of a server comprising one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network 106 but do not participate in validating transactions or constructing blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network 106; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This comprises first checking whether the newly received transaction 152j meets a certain condition for being "valid", examples of which will be discussed in more detail shortly. In some transaction protocols, the condition for validation may be configurable on a per-transaction basis by scripts included in the transactions 152.

Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered pool of pending transactions 154 maintained at a given blockchain node 104, that blockchain node 104 will start competing to solve the proof-of-work puzzle on the latest version of their respective pool of 154 including the new transaction 152 (recall that other blockchain nodes 104 may be trying to solve the puzzle based on a different pool of transactions154, but whoever gets there first will define the set of transactions that are included in the latest block 151. Eventually a blockchain node 104 will solve the puzzle for a part of the ordered pool 154 which includes Alice's transaction 152j). Once the proof-of-work has been done for the pool 154 including the new transaction 152j, it immutably becomes part of one of the blocks 151 in the blockchain 150. Each transaction 152 comprises a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

### UTXO-BASED MODEL

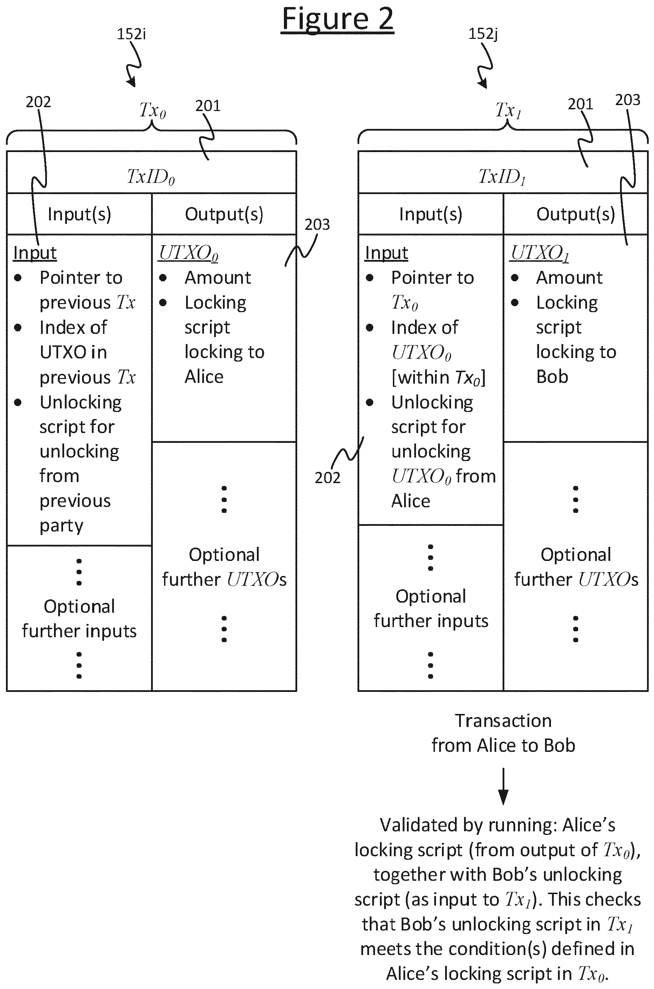

Figure 2 illustrates an example transaction protocol. This is an example of a UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled " *Tx₁".* It takes an amount of the digital asset that is locked to Alice in the output 203 of a preceding transaction 152i in the sequence, and transfers at least some of this to Bob. The preceding transaction 152i is labelled *" Tx₀"* in Figure 2. *Txoand Tx₁* are just arbitrary labels. They do not necessarily mean that *Tx₀* is the first transaction in the blockchain 151, nor that *Tx₁* is the immediate next transaction in the pool 154. *Tx₁* could point back to any preceding (i.e. antecedent) transaction that still has an unspent output 203 locked to Alice.

The preceding transaction *Tx₀* may already have been validated and included in a block 151 of the blockchain 150 at the time when Alice creates her new transaction *Tx₁,* or at least by the time she sends it to the network 106. It may already have been included in one of the blocks 151 at that time, or it may be still waiting in the ordered set 154 in which case it will soon be included in a new block 151. Alternatively *Tx₀* and *Tx₁* could be created and sent to the network 106 together, or *Tx₀* could even be sent after *Tx₁* if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction *Tx₀* comprises a particular UTXO, labelled here *UTXO₀.* Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). I.e. the locking script defines an unlocking condition, typically comprising a condition that the unlocking script in the input of the subsequent transaction comprises the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, *UTXO₀* in the output 203 of *Tx₀* comprises a locking script [Checksig *P_{A}*] which requires a signature Sig *P_{A}* of Alice in order for *UTXO₀* to be redeemed (strictly, in order for a subsequent transaction attempting to redeem *UTXO₀* to be valid). [Checksig *P_{A}*] contains a representation (i.e. a hash) of the public key *P_{A}* from a public-private key pair of Alice. The input 202 of *Tx₁* comprises a pointer pointing back to *Tx₁* (e.g. by means of its transaction ID, *TxID₀,* which in embodiments is the hash of the whole transaction *Tx₀*). The input 202 of *Tx₁* comprises an index identifying *UTXO₀* within *Tx₀,* to identify it amongst any other possible outputs of *Tx₀.* The input 202 of *Tx₁* further comprises an unlocking script <Sig *P_{A}*> which comprises a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction *Tx₁* arrives at a blockchain node 104, the node applies the node protocol. This comprises running the locking script and unlocking script together to check whether the unlocking script meets the condition defined in the locking script (where this condition may comprise one or more criteria). In embodiments this involves concatenating the two scripts:
<Sig *P_{A}> <P_{A}>* || [Checksig *P_{A}*] where "| |" represents a concatenation and "<...>" means place the data on the stack, and "[...]" is a function comprised by the locking script (in this example a stack-based language). Equivalently the scripts may be run one after the other, with a common stack, rather than concatenating the scripts. Either way, when run together, the scripts use the public key *P_{A}* of Alice, as included in the locking script in the output of *Tx₀,* to authenticate that the unlocking script in the input of *Tx₁* contains the signature of Alice signing the expected portion of data. The expected portion of data itself (the "message") also needs to be included in order to perform this authentication. In embodiments the signed data comprises the whole of *Tx₁* (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically comprises hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in *Tx₁* meets the one or more conditions specified in the locking script of *Tx₀* (so in the example shown, if Alice's signature is provided in *Tx₁* and authenticated), then the blockchain node 104 deems *Tx₁* valid. This means that the blockchain node 104 will add *Tx₁* to the ordered pool of pending transactions 154. The blockchain node 104 will also forward the transaction *Tx₁* to one or more other blockchain nodes 104 in the network 106, so that it will be propagated throughout the network 106. Once *Tx₁* has been validated and included in the blockchain 150, this defines *UTXO₀* from *Tx₀* as spent. Note that *Tx₁* can only be valid if it spends an unspent transaction output 203. If it attempts to spend an output that has already been spent by another transaction 152, then *Tx₁* will be invalid even if all the other conditions are met. Hence the blockchain node 104 also needs to check whether the referenced UTXO in the preceding transaction *Tx₀* is already spent (i.e. whether it has already formed a valid input to another valid transaction). This is one reason why it is important for the blockchain 150 to impose a defined order on the transactions 152. In practice a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However the amount from the UTXO can be split between multiple outputs of the next transaction. E.g. the amount defined in *UTXO₀* in *Tx₀* can be split between multiple UTXOs in *Tx₁.* Hence if Alice does not want to give Bob all of the amount defined in *UTXO₀,* she can use the remainder to give herself change in a second output of *Tx₁,* or pay another party.

In practice Alice will also usually need to include a fee for the bitcoin node 104 that successfully includes her transaction 104 in a block 151. If Alice does not include such a fee, *Tx₀* may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. E.g. say a pointer to *UTXO₀* is the only input to *Tx₁,* and *Tx₁* has only one output *UTXO₁.* If the amount of the digital asset specified in *UTXO₀* is greater than the amount specified in *UTXO₁,* then the difference may be assigned by the node 104 that wins the proof-of-work race to create the block containing *UTXO₁.* Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. E.g. the data could comprise a document which it is desired to store in the blockchain.

Typically an input of a transaction contains a digital signature corresponding to a public key *P_{A}.* In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically comprises the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

As shown in Figure 1, the client application on each of Alice and Bob's computer equipment 102a, 120b, respectively, may comprise additional communication functionality. This additional functionality enables Alice 103a to establish a separate side channel 301 with Bob 103b (at the instigation of either party or a third party). The side channel 301 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 301 may be used to exchange any other transaction related data, such as keys, negotiated amounts or terms, data content, etc.

The side channel 301 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 301 as referred to anywhere herein may comprise any one or more links via one or more networking technologies or communication media for exchanging data "off-chain", i.e. separately from the blockchain network 106. Where more than one link is used, then the bundle or collection of off-chain links as a whole may be referred to as the side channel 301. Note therefore that if it is said that Alice and Bob exchange certain pieces of information or data, or such like, over the side channel 301, then this does not necessarily imply all these pieces of data have to be send over exactly the same link or even the same type of network.

### CLIENT SOFTWARE

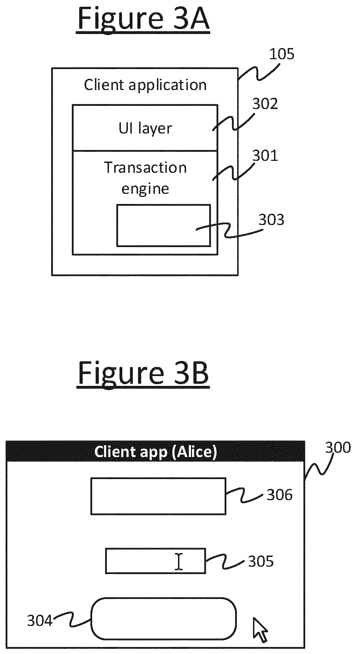

Figure 3A illustrates an example implementation of the client application 105 for implementing embodiments of the presently disclosed scheme. The client application 105 comprises a transaction engine 301 and a user interface (UI) layer 302. The transaction engine 301 is configured to implement the underlying transaction-related functionality of the client 105, such as to formulate transactions 152, receive and/or send transactions and/or other data over the side channel 107, and/or send transactions to one or more nodes 104 to be propagated through the blockchain network 106, in accordance with the schemes discussed above and as discussed in further detail shortly.

The UI layer 302 is configured to render a user interface via a user input/output (I/O) means of the respective user's computer equipment 102, including outputting information to the respective user 103 via a user output means of the equipment 102, and receiving inputs back from the respective user 103 via a user input means of the equipment 102. For example the user output means could comprise one or more display screens (touch or non-touch screen) for providing a visual output, one or more speakers for providing an audio output, and/or one or more haptic output devices for providing a tactile output, etc. The user input means could comprise for example the input array of one or more touch screens (the same or different as that/those used for the output means); one or more cursor-based devices such as mouse, trackpad or trackball; one or more microphones and speech or voice recognition algorithms for receiving a speech or vocal input; one or more gesture-based input devices for receiving the input in the form of manual or bodily gestures; or one or more mechanical buttons, switches or joysticks, etc.

Note: whilst the various functionality herein may be described as being integrated into the same client application 105, this is not necessarily limiting and instead they could be implemented in a suite of two or more distinct applications, e.g. one being a plug-in to the other or interfacing via an API (application programming interface). For instance, the functionality of the transaction engine 301 may be implemented in a separate application than the UI layer 302, or the functionality of a given module such as the transaction engine 301 could be split between more than one application. Nor is it excluded that some or all of the described functionality could be implemented at, say, the operating system layer. Where reference is made anywhere herein to a single or given application 105, or such like, it will be appreciated that this is just by way of example, and more generally the described functionality could be implemented in any form of software.

Figure 3B gives a mock-up of an example of the user interface (UI) 300 which may be rendered by the UI layer 302 of the client application 105a on Alice's equipment 102a. It will be appreciated that a similar UI may be rendered by the client 105b on Bob's equipment 102b, or that of any other party.

By way of illustration Figure 3B shows the UI 300 from Alice's perspective. The UI 500 may comprise one or more UI elements 304, 305, 306 rendered as distinct UI elements via the user output means.

For example, the UI elements may comprise one or more user-selectable elements 304 which may be, such as different on-screen buttons, or different options in a menu, or such like. The user input means is arranged to enable the user 103 (in this case Alice 103a) to select or otherwise operate one of the options, such as by clicking or touching the UI element on-screen, or speaking a name of the desired option (N.B. the term "manual" as used herein is meant only to contrast against automatic, and does not necessarily limit to the use of the hand or hands). The options enable the user (e.g. Alice) to submit data to an internet server, e.g. some or all of a blockchain transaction, or to generate a signature.

Alternatively or additionally, the UI elements may comprise one or more data entry fields 305, through which the user can enter data such as a signature or blockchain address. These data entry fields are rendered via the user output means, e.g. on-screen, and the data can be entered into the fields through the user input means, e.g. a keyboard or touchscreen. Alternatively the data could be received orally for example based on speech recognition.

Alternatively or additionally, the UI elements may comprise one or more information elements 306 output to output information to the user. E.g. this/these could be rendered on screen or audibly.

It will be appreciated that the particular means of rendering the various UI elements, selecting the options and entering data is not material. The functionality of these UI elements will be discussed in more detail shortly. It will also be appreciated that the UI 300 shown in Figure 3B is only a schematized mock-up and in practice it may comprise one or more further UI elements, which for conciseness are not illustrated.

### CONNECTING TO THE BLOCKCHAIN NETWORK

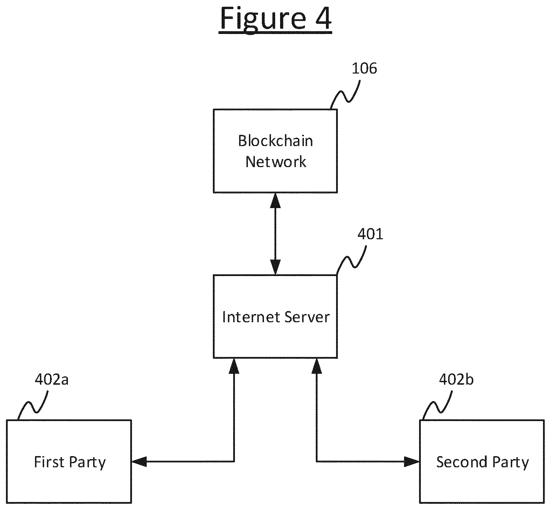

Figure 4 illustrates an example system 400 for implementing embodiments of the present invention. The system comprises an internet server 401, a first party 402a and the blockchain network 106, or at least one or more nodes 104 of the blockchain network 106. The system may also include a second party 402b. Each of the first and second parties 402a, 402b may take the role of Alice 103a or Bob 103b as described with reference to Figure 1. That is, the first party 402a may comprise respective computing equipment 102a and operate a client application 105a configured to perform some or all of the actions associated with Alice 103a. Similarly, the second party 402b may comprise respective computing equipment 102b and operate a client application 105b configured to perform some or all of the actions associated with Bob 103b. Note that the first party 402a may perform some of the actions associated with Bob 103b, and vice versa.

The internet server 401 comprises processing apparatus comprising one or more processors, e.g. one or more central processing units (CPUs), accelerator processors, application specific processors and/or field programmable gate arrays (FPGAs), and other equipment such as application specific integrated circuits (ASICs). The internet server 401 also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive. The memory on the internet server 401 may store software arranged to run on the processing apparatus. The software may be initially provided to the internet server 401 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

Internet servers per se are well known and so their generic functions will not be described here in detail. In general, the internet server 401 may take any of the following forms: a database server, a mail server, a web server, a game server, or an application server. The internet server 401 may instead take a different form. A database server is a server which uses a database application that provides database services to other computer programs or to computers. A web server is a server that is configured to satisfy client requests on the World Wide Web. A web server typically hosts one or more websites and processes incoming network requests over HTTP and several other related protocols. An application server typically provides both the facilities to create web applications and a server environment to run them. A game server (also sometimes referred to as a host) is a server which is the authoritative source of events in a multiplayer video game. The server transmits enough data about its internal state to allow its connected clients to maintain their own accurate version of the game world for display to players. They also receive and process each player's input.

The internet server 401 is configured to host (i.e. serve) an internet service to its connected clients. The type of internet service hosted by the internet server 401 will depend on the form of the internet server 401. If the internet server 401 is a web server, the internet service will be a website, whereas if the internet server 401 is a mail server, the internet server will be a mailbox. Similarly, a game server will host an internet service in the form of an online video game, a database server will host an internet service in the form of an online database and an application server will host an internet service in the form of an application run using the internet.

To submit a blockchain transaction to the blockchain network, instead of connecting directly to one or more blockchain nodes 104, the first party 402a (i.e. the client application 105a operated by the first party 402a) is configured to connect to an internet server 401 via an internet service hosted by the internet server 401. The first party 402a provides the internet server, again via the internet service, with one or more components of a blockchain transaction. That is, the first party 402a transmits at least part of a blockchain transaction to the internet server 401 via the internet service. In some examples, the first party 402a provides a complete blockchain transaction. In other examples, the first party 402a transmits one or more inputs and/or one or more outputs of a blockchain transaction for completing a transaction template. Note that transmitting an input or output is taken to mean transmitting input data (e.g. an unlocking script or part of an unlocking script) or output data (e.g. a locking script or part of a locking script). For instance, the first party 402a may transmit a signature, generated using a private key owned by the first party 402a, to the internet server 401. As another example, the first party 402a may supply a public key or public key hash, which may be linked with the first party 402a or the second party 402b.

The internet service hosted by the internet server 401 may comprise one or more data entry fields (i.e. input fields) for entering data. The first party 402a may enter transaction data, e.g. signatures, public key, transaction identifiers, transaction outpoints, etc., using the data entry fields. Similarly, the internet service may comprise one or more functions for generating transaction data, e.g. a signature or public key hash.

Note that preferably the first party 402a has a secure communication channel with the internet server 401, and/or the first party 402a uses one or more cryptographic techniques to preserve security and/or privacy. These are discussed below.

The internet server 401 is configured to obtain the one or more transaction components and to transmit a transaction comprising those components to one or more blockchain nodes 104. If the first party 402a has supplied a complete transaction, the internet server 401 forwards the transaction to the blockchain nodes 104. Alternatively, the internet server 401 may generate a transaction based on the transaction component(s), e.g. by entering the component(s), i.e. data, into a transaction template.

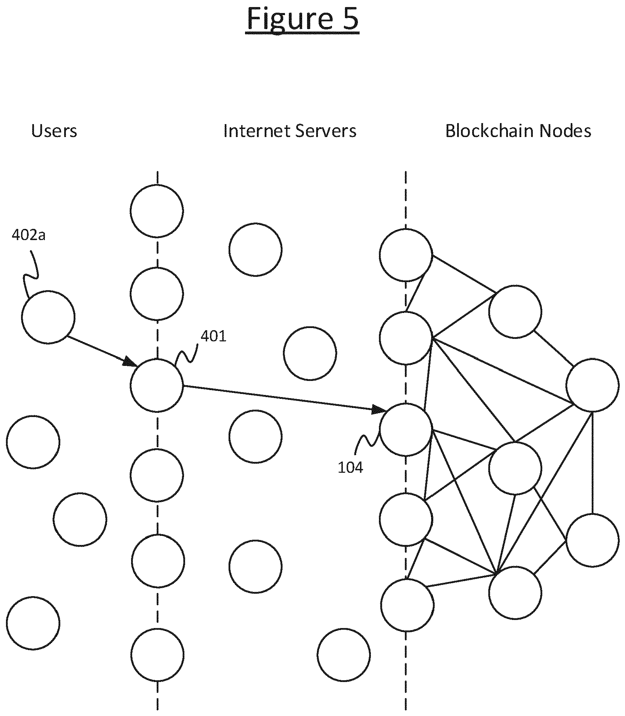

Figure 5 illustrates an example flow of a transaction from the first party 402a to the blockchain network via the internet server 401. As shown, in reality there may be many different parties 402 (e.g. users) which are served by multiple internet servers 401. Any given internet server 401 may serve a single party 402 or multiple parties 402. Similarly, an internet server 401 may be connected to only one blockchain node 104 or to multiple blockchain nodes 104.

The internet server 401 may maintain a permanent connection to the blockchain network 106 via one or more respective connections to respective blockchain nodes 104. Alternatively, the internet server 401 may periodically connect to one or more blockchain nodes 104, or the internet server 401 may connect on an ad hoc basis.

The internet server 401 may maintain a connection to a minimum number of blockchain nodes. For instance, if the number of connections drops below a predefined minimum, the internet server 401 may connect to one or more additional nodes to take the number of connections back to at least the predefined minimum.

In contrast, the first party 402a need not have a permanent connection to the internet server 401 and instead may connect to the internet server 401, via the internet service, on an ad hoc basis, e.g. when using the internet service. However it is also not excluded that the first party 402a may be permanently connected to the internet server 401 via the internet service.

In embodiments in which the system 400 comprises a second party 402b, the second party 402b may transmit a request message to the first party 402a. The request message may be transmitted directly to the first party 402a, e.g. via a side channel 107. Alternatively, the request message may be transmitted via the internet server 401. That is, the second party 402a may transmit a request message, using the internet service hosted by the internet server 401, to the internet server 401, which then presents the request message to the first party 402a using the internet service. As an illustrative example, the request message may be entered and presented using a website (e.g. a social media sites) hosted by a web server 401.

The request message may comprise a request to assign a number of digital assets, owned by the first party 402a, to the second party 402b, e.g. in return for goods or services. Additionally or alternatively, the request message may comprise one or more components of a blockchain transaction. For instance, the request message may comprise a locking script comprising a public key (or hash thereof) linked to the second party 402b.

The first party 402a may transmit the blockchain transaction (or at least the one or more components of the blockchain transaction) to the internet server 401 in response to receiving the request message. As an example, the second party 402b may send a blockchain address to the first party 402a (e.g. via the internet server 401), and the first party 402a may send a signature for unlocking a UTXO to the internet server 401. The internet server 401 may then formulate a transaction based on those components for sending to the blockchain network 106.

Note that the first party 402a may perform any of the actions associated with the request message that have been described as being performed by the second party 402b, with any necessary adaptations. That is, the first party 402a may send a request message to the second party 402b, e.g. to assign an amount of the digital asset to a blockchain address linked to the first party 402a.

In some embodiments, after the first party 402a sends the blockchain transaction (or component(s) thereof) to the internet server 401, and after the internet server 401 subsequently submits the blockchain transaction to the blockchain network 106, the internet server 401 may transmit an update message to the first party 402a. The update message is presented to the first party 402a via the internet service.

In general, the update message comprises information concerning the transaction that has been submitted to the blockchain network 106. The update message may comprise the transaction itself, i.e. a copy of the transaction that comprises the component(s) supplied by the first party 402a and that was submitted to the network 106. The update message may, as an additional or alternative option, comprise an indication that the transaction has been successfully published on the blockchain 150. The indication may comprise a block header of the block 151 in which the transaction has been included. In some examples, the update message may comprise a Merkle path for verifying that the transaction has been included in a block 151. A Merkle path comprises a set of hashes that, together with a hash of the transaction, is used to calculate a Merkle root of a Merkle tree. If the Merkle root, generated using the Merkle path and the hash of the transaction, corresponds to a block header of a block 151 of the blockchain 150, the first party 402a can be certain that the transaction was included in that block 151.

The internet server 401 is configured to maintain a list of contacts (i.e. other parties 402) associated with the first party 402a. For each contact, the internet server 401 records one or more blockchain addresses (e.g. public keys and/or public key hashes) linked with that contact, i.e. owned by that contact. The internet server 401 is configured to transmit the list of contacts and/or blockchain addresses to the first party 402a, via the internet service. The first party 402a may use this information to connect with the first party's contacts. In this sense, connecting with a contact may comprise assigning digital assets owned by the first party 402a to one of the contacts, e.g. the second party 402b.

As mentioned above, the internet server 401 may be a web server that hosts a web service, e.g. a website. That is, the web server 401 may serve one or more web pages to the first party 402a. Preferably, the first party 402a (i.e. the client application operated by the first party 402a) and the web server 401 communicate using Hypertext Transfer Protocol (HTTP). For instance, the transaction (or components thereof) may be transmitted to the web server 401 using HTTP. Similarly, the request message may be sent to/from the web server 401 using HTTP. The update message may also be sent to the first party 402a from the web server 401 using HTTP. Whilst HTTP is preferred, it is not excluded that data may be sent between the first party 402a and the web server using an alternative protocol, e.g. Simple Mail Transfer Protocol (SMTP) or File Transfer Protocol (FTP).

Alternatively, the internet server 401 may be a mail server that hosts a mail service, e.g. an email application. From the perspective of the first party 402a, the mail server may be an incoming mail server and/or an outgoing mail server. The first party 402a and the mail server may communicate using one Simple Mail Transfer Protocol (SMTP) for outgoing messages, and one of a Post Office Protocol (POP), e.g. POP3, or Internet Message Access Protocol (IMAP) for incoming messages.

The website or email application may include an embedded function configured to submit the blockchain transaction, or components thereof, to the web server or mail server respectively. For instance, an existing email application may be modified to include a data entry field or "button" that is configured to receive and/or generate transaction data. The website (e.g. a social media site or other type of web page) may also include a similarly configured function.

The following provides further details regarding web servers and mail servers configured to implement embodiments of the invention.

The internet server 401 may be a web 2.0 server. Web 2.0 refers to the second generation of the world wide web. Web 2.0 provides an interactive and dynamic web experience for users to share information online via social media, blogs and other web-based communities. Although the back-end infrastructure of the web remains the same, the front-end has been enriched with web browser technologies supported by, for example, AJAX and JavaScript frameworks to support new user information flows and dynamic content that is responsive to user input.

Web 2.0 servers (and web servers in general) may be used to propagate transactions to blockchain nodes 104 on the blockchain network 106. A user 402a may operate a browser-based client application, which may operate to a simplified payment verification (SPV) method. The application may appear as a browser extension on a web 2.0 platform, for instance on a social media site. The user may create a transaction using the applications API. The application then propagates the transaction via one or more web 2.0 servers to one or more blockchain nodes 104. Those blockchain nodes then validate the transaction and may send an update back to the client application, e.g. via the web 2.0 server. Figure 5 schematically illustrates this process.

SPV client applications require a high level of connectivity and so may make use of the present invention. Such applications also sometimes require a high degree of security due to sensitive data being included in transactions that will be published on the blockchain 150. Therefore the data submitted to the web server may be encrypted, e.g. by the user 402a or by the web service.

Connecting to the blockchain network 106 using web servers may also be used to bootstrap new users during network discovery. URL Flux-based Command and Control (UFCC) is a centralised architecture for communication using web 2.0 services. UFCC manages peer-lists within a network via web links to active peers. The links are typically uploaded to popular web 2.0 services that promise 24-hour online availability. For an SPV client application, a UFCC communication system can be implemented to connect with other online peers (i.e. operating a respective instance of the SPV client application) during a bootstrap procedure. Blockchain nodes 104 may use a similar bootstrapping process to discover other blockchain nodes 104 when joining the blockchain network 106. For instance, a blockchain node 104 may download a list of other blockchain nodes 104, (like the list of contacts on a social media account) to see which blockchain nodes 104 are active (e.g. 'online') in the blockchain network 106, in order to broadcast transactions to online nodes 104. The list is maintained by the internet server 401, which may transmit the list to a node 104, e.g. upon request. The list may contain a list of identifiers (e.g. network address, public key, etc.). Each identifier is associated with a different node 104.

The internet server may be a mail server. The mail server may be used to serve a client application in analogy to an email account. The mail server monitors the addresses (e.g. public keys or public key hashes) of a user 402 (account holder) to consolidate UTXOs and store the account information on the mail server. The information may be presented to the user when the user accesses their account.

The mail server may be non-custodial i.e. the server does not store digital keys on behalf of the first party 402a. The server 401 may file know-your-customer (KYC) information that proves the identity of the account holder (first party 402a). This information could be stored on- or off-chain. For instance, the server 401 may store a pointer to the location of a digital identity certificate embedded in a blockchain transaction. The server 401 monitors the relevant transaction ID in the UTXO set to ensure that the user's certified key(s) are up-to-date, i.e. the digital certificate has not expired. The server 401 may only submit the transaction to the blockchain 150 if the user's certified key has not expired. Note that this may also apply to other types of internet servers 401.

As mentioned above, cryptographic techniques may be used to ensure a user's security and/or privacy is retained when propagating transactions over internet servers 401. For instance, the first party 402a may implement digital key management to cycle through unique digital keypairs that are used to sign individual transactions, e.g. the same key is not used more than once to sign a transaction. Similarly, a second party 402b (e.g. a merchant) can ensure know-your-customer (KYC) and/or anti-money laundering (AML) regulatory compliance by requesting that the first party 402a signs the transaction with a certified key.

Since digital keypairs are preferably only used once, a user's digital keypairs can be cryptographically linked to their certified identity using hierarchically deterministic keys that are derived from a certified root key, see e.g. GB1913704.1. Note that this method can also be combined with a secret value distribution method to embed a shared secret into the key derivation path, thereby creating a private link between the sender and the recipient, see e.g. WO/2017/145016. As another example, additional measures can be taken to protect a user's private keys that are linked to larger funds. A user may partly sign the transaction with a digital signature derived from the share of a private key. A threshold number of signatures must be reached to broadcast the complete transaction. Note that the full private key (combination of all key shares) never exists, which means that it can never be stolen from the user's web wallet by a malicious agent. The skilled person will be familiar with threshold signatures schemes. Finally, the first party 402a may use an encrypted browser, whereby traffic can be encrypted using a TLS client / server key encryption in accordance with the HTTPS communication protocol. This may be an SSL server certificate for the web wallet issuer and an SSL client certificate both based on the elliptic curve digital signature algorithm (ECDSA) keys of both the user and the server.

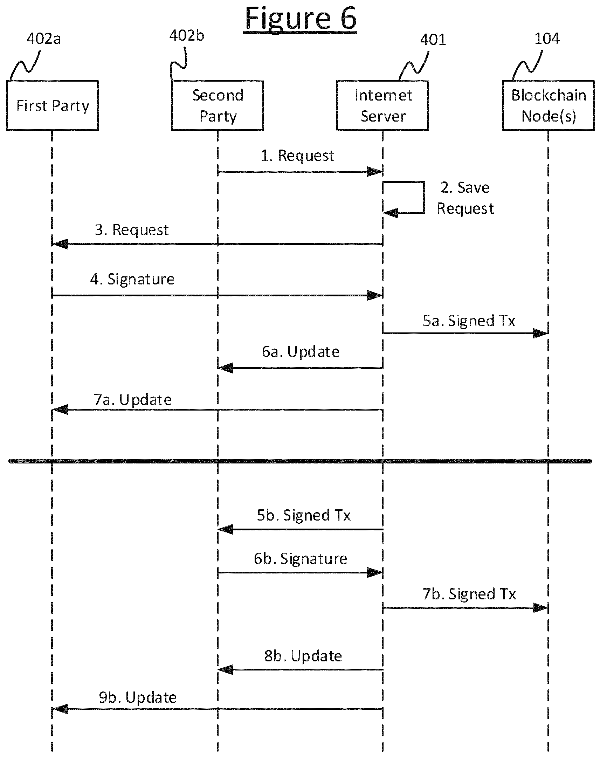

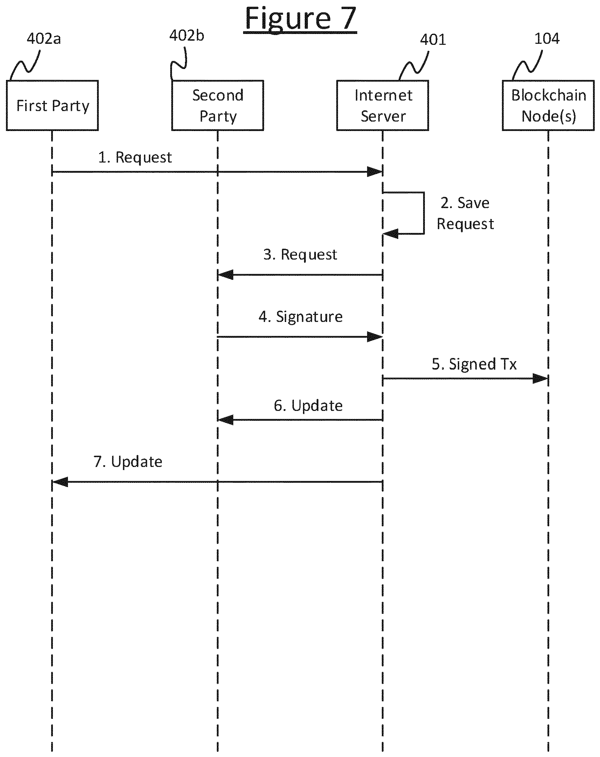

Figures 6 and 7 illustrate example use cases of the present invention. Figure 6 illustrates a merchant (second party 402b) conducting the sale of a product to a user (first party 402a) using the blockchain 150. Figure 7 illustrates a merchant receiving a refund request for a product by a user using the blockchain 150. It will be appreciated that this example is for illustrative purposes only and the technique may be applied more generally to other use cases. That is, embodiments of the invention are not limited to customer-merchant type interactions.

The sequence shown in Figure 6 is as follows. It will be appreciated that some of the steps are optional. At step 1, a merchant 402b sends a payment request to the internet server 401. The payment request may comprise a request for an amount of the digital asset. The payment request may comprise a locking script, or part of a locking script, for locking the amount of the digital asset to a blockchain address associated with the merchant 402b. Note that preferably the payment request only includes part of the locking script, as opposed to a complete locking script, if the internet server 401 is operated by a trusted third party and/or a secure communication channel is used. At step 2, the internet server 401 saves the request for sending to the customer 402a when the customer comes online, e.g. accesses a web service or email application. At step 3, the customer 402a comes online and the internet server 401 sends the request to the customer 402a. At step 4, the customer 402a responds to the request. The customer 402a may reject the request and so send a reject message back to the internet server 401, which would then forward to the merchant 402b. Alternatively, as shown in Figure 6, the customer 402a may accept the request. This may involve the customer sending a signature back to the internet server 401, e.g. a signature for unlocking a UTXO of a previous transaction.

The internet server 401 may then take one of several options, two of which are shown. In one example, at step 5a, the internet server 401 sends a signed transaction directly to the blockchain network 106. For instance, the internet server 401 may use the data contained in the payment request and the signature from the customer 402a to complete a transaction template. At steps 6a and 7a, the internet server 401 sends updates to the merchant 402b and customer 402a respectively. The updates may comprise a Merkle path for verifying that the transaction has been included in a block 151, or other data relating to the transaction.

In another example, at step 5b, the internet server 401 sends the signed transaction to the merchant 402b. At step 6b, the merchant may check and finalise the transaction, e.g. signing the transaction, before sending to the internet server 401. Alternatively, the merchant may submit the transaction to the blockchain network 106 if it has a direct connection to a node 104. At step 7b, the internet server 401 sends the transaction to the blockchain network 106. At steps 8b and 9b, the internet server 401 sends updates to the merchant 402b and customer 402a respectively.

The sequence shown in Figure 7 is as follows. It will be appreciated that some of the steps are optional. The steps of Figure 7 are similar to those of Figure 6. At step 1, a customer 402a sends a refund request to the internet server 401. The refund request may comprise a request for an amount of the digital asset. The refund request may comprise a locking script, or part of a locking script, for locking the amount of the digital asset to a blockchain address associated with the customer 402a. As for the payment request, preferably the refund request only includes part of the locking script, as opposed to a complete locking script, if the internet server 401 is operated by a trusted third party and/or a secure communication channel is used. At step 2, the internet server 401 saves the request for sending to the merchant 402a when the merchant comes online, e.g. accesses a web service or email application. At step 3, the merchant 402b comes online and the internet server 401 sends the request to the merchant 402b. The internet server 401 may send the customer's certified key as proof for the merchant 402b to accept the request. At step 4, the merchant 402b responds to the request. The merchant 402b may reject the request and so send a reject message back to the internet server 401, which would then forward to the customer 402a. Alternatively, as shown in Figure 7, the merchant 402a may accept the request. This may involve the merchant 402b sending a signature back to the internet server 401, e.g. a signature for unlocking a UTXO of a previous transaction. The internet server 401 may save the full transaction and Merkle path if sent by the merchant 402b. Alternatively, the merchant 402b may download the input transaction and look for the Merkle path. At step 5, the internet server 401 sends a signed transaction directly to the blockchain network 106. For instance, the internet server 401 may use the data contained in the refund request and the signature from the merchant 402b to complete a transaction template. At steps 6 and 7, the internet server 401 sends updates to the merchant 402b and customer 402a respectively. The updates may comprise a Merkle path for verifying that the transaction has been included in a block 151, or other data relating to the transaction.

In summary, existing web and mail server infrastructures may be used to boost the connectivity of users (and other parties) 402 to the blockchain network 106. Blockchain transactions may be broadcast over web servers (e.g. web 2.0 servers) to blockchain nodes 104. Network discovery can be improved during the bootstrap procedure of new users to active peers that are also connected to web or email services. The invention is particularly advantageous for lightweight client applications using an SPV method where a high degree of network connectivity is required. Since lightweight clients do not require access to the entire blockchain, transactions can be propagated via web or mail services. Due to their typically large user bases and 24-hour online availability, web 2.0 services (and other internet services) can be highly effective in boosting transaction propagation for blockchain client applications. In addition to HTTP-based applications, SMTP and IMAP/POP protocols can be utilised to propagate transactions using a mail server, in analogy to email accounts.

### CONCLUSION

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In preferred embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In non-preferred embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

## Claims

1. A computer-implemented method of transmitting blockchain transactions to a blockchain network (106), wherein the method is performed by a first party (402a) and comprises:
transmitting at least part of a blockchain transaction to an internet server (401) via an internet service hosted by the internet server (401), wherein the internet server (401) is configured to connect to one or more nodes (104) of the blockchain network (106), and to transmit a blockchain transaction to the one or more blockchain nodes (104), wherein the transmitted blockchain transaction comprises the at least part of the blockchain transaction;
**characterised by**
receiving, from the internet server (401) via the internet service, a list of contacts, which are other parties (402b) associated with the first party (402a), wherein for each contact in the list, the list comprises a respective one or more blockchain addresses associated with that contact.

2. The method of claim 1, wherein the internet server (401) is a mail server, and wherein the internet service is a mail service.

3. The method of claim 2, wherein the at least part of the blockchain transaction is transmitted to the mail server using a simple mail transfer protocol, SMTP.

4. The method of any preceding claim, wherein the internet service comprises an input field for inputting data, and wherein the method comprises inputting the at least part of the blockchain transaction via the input field.

5. The method of any preceding claim, comprising generating the at least part of the blockchain transaction.

6. The method of any of claims 1 to 4, wherein the at least part of the blockchain transaction is generated by a second party (402b).

7. The method of any preceding claim, wherein the at least part of the blockchain transaction comprises a respective digital signature generated by the first party (402a) and/or the second party (402b).

8. The method of any preceding claim, wherein the at least part of the blockchain transaction is a complete blockchain transaction.

9. The method of any preceding claim, comprising receiving a request message from the internet server (401) via the internet service, wherein said transmitting of the at least part of the blockchain transaction is in response to said receiving of the request message, and wherein the request message comprises:
a request to assign an unspent transaction output of a previous blockchain transaction to the second party (402b), the request originating from the second party (402b); and/or
the at least part of the blockchain transaction being generated by the second party (402b).

10. The method of any of claims 1 to 8, comprising transmitting a request message to the internet server (401) via the internet service, wherein said transmitting of the at least part of the blockchain transaction is in response to receiving a response to the request message, and wherein the request message comprises:
a request to assign an unspent transaction output of a previous blockchain transaction to the first party (402a), the request originating from the first party (402a); and/or
the at least part of the blockchain transaction being generated by the first party (402a).

11. The method of any preceding claim, comprising receiving an update message from the internet server (401) via the internet service, wherein the update message comprises at least one of:
the blockchain transaction,
an indication that the blockchain transaction has been published in a block of the blockchain (150), and/or
a Merkle path for verifying that the blockchain transaction has been included in the block of the blockchain (150).

12. The method of any preceding claim, wherein an output of the blockchain transaction is locked to a blockchain address associated with one of the contacts.

13. A computer-implemented method of transmitting blockchain transactions to a blockchain network (106), wherein the method is performed by an internet server (401) configured to connect to one or more blockchain nodes (104) and comprises:
receiving, from a first party (401a) via an internet service hosted by the internet server (401), at least part of a blockchain transaction;
transmitting a blockchain transaction to the one or more blockchain nodes (106), wherein the blockchain transaction comprises the at least part of the blockchain transaction;
**characterised by**
maintaining a list of contacts, which are other parties (402b) associated with the first party (402a), wherein the list of contacts comprises, for each contact, one or more blockchain addresses associated with that contact; and
transmitting the list of contacts to the first party (402a).

14. Computer equipment comprising:
memory comprising one or more memory units; and
processing apparatus comprising one or more processing units, wherein the memory stores code arranged to run on the processing apparatus, the code being configured so as to cause the processing apparatus to perform the method of any of claims 1 to 13.

15. A computer program embodied on computer-readable storage and configured so as, when run on computer equipment of claim 14, to perform the method of any of claims 1 to 13.

## Patentansprüche

1. Computerimplementiertes Verfahren zum Übertragen von Blockchain-Transaktionen an ein Blockchain-Netzwerk (106), wobei das Verfahren durch eine erste Partei (402a) durchgeführt wird und Folgendes umfasst:
Übertragen mindestens eines Teils einer Blockchain-Transaktion an einen Internet-Server (401) über einen Internet-Dienst, der durch den Internet-Server (401) gehostet wird, wobei der Internet-Server (401) dazu ausgelegt ist, sich mit einem oder mehreren Knoten (104) des Blockchain-Netzwerks (106) zu verbinden und eine Blockchain-Transaktion an den einen oder die mehreren Blockchain-Knoten (104) zu übertragen, wobei die übertragene Blockchain-Transaktion den mindestens einen Teil der Blockchain-Transaktion umfasst;
**gekennzeichnet durch** Empfangen, von dem Internet-Server (401) über den Internet-Dienst, einer Liste von Kontakten, die andere Parteien (402b) sind, die mit der ersten Partei (402a) assoziiert sind, wobei für jeden Kontakt in der Liste die Liste eine jeweilige eine oder mehrere Blockchain-Adressen umfasst, die mit diesem Kontakt assoziiert sind.

2. Verfahren nach Anspruch 1, wobei der Internet-Server (401) ein Mail-Server ist und wobei der Internet-Dienst ein Mail-Dienst ist.

3. Verfahren nach Anspruch 2, wobei der mindestens eine Teil der Blockchain-Transaktion unter Verwendung eines Simple Mail Transfer-Protokolls (SMTP) an den Mail-Server übertragen wird.

4. Verfahren nach einem der vorhergehenden Ansprüche, wobei der Internet-Dienst ein Eingabefeld zum Eingeben von Daten umfasst und wobei das Verfahren das Eingeben des mindestens einen Teils der Blockchain-Transaktion über das Eingabefeld umfasst.

5. Verfahren nach einem der vorhergehenden Ansprüche, das Erzeugen des mindestens einen Teils der Blockchain-Transaktion umfasst.

6. Verfahren nach einem der Ansprüche 1 bis 4, wobei der mindestens eine Teil der Blockchain-Transaktion durch eine zweite Partei erzeugt wird (402b).

7. Verfahren nach einem der vorhergehenden Ansprüche, wobei der mindestens eine Teil der Blockchain-Transaktion eine jeweilige digitale Signatur umfasst, die durch die erste Partei (402a) und/oder die zweite Partei (402b) erzeugt wird.

8. Verfahren nach einem der vorhergehenden Ansprüche, wobei der mindestens eine Teil der Blockchain-Transaktion eine vollständige Blockchain-Transaktion ist.

9. Verfahren nach einem der vorhergehenden Ansprüche, das Empfangen einer Anforderungsnachricht von dem Internet-Server (401) über den Internet-Dienst umfasst, wobei das Übertragen des mindestens einen Teils der Blockchain-Transaktion als Reaktion auf das Empfangen der Anforderungsnachricht erfolgt und wobei die Anforderungsnachricht Folgendes umfasst:
eine Anforderung zum Zuweisen einer nicht ausgenutzten Transaktionsausgabe einer vorherigen Blockchain-Transaktion zu der zweiten Partei (402b), wobei die Anforderung von der zweiten Partei (402b) stammt; und/oder
wobei der mindestens eine Teil der Blockchain-Transaktion durch die zweite Partei erzeugt wird (402b).

10. Verfahren nach einem der Ansprüche 1 bis 8, das Senden einer Anforderungsnachricht an den Internet-Server (401) über den Internet-Dienst umfasst, wobei das Senden des mindestens einen Teils der Blockchain-Transaktion als Reaktion auf das Empfangen einer Antwort auf die Anforderungsnachricht erfolgt und wobei die Anforderungsnachricht Folgendes umfasst:
eine Anforderung zum Zuweisen einer nicht ausgenutzten Transaktionsausgabe einer vorherigen Blockchain-Transaktion zu der ersten Partei (402a), wobei die Anforderung von der ersten Partei (402a) stammt; und/oder wobei der mindestens eine Teil der Blockchain-Transaktion durch die erste Partei erzeugt wird (402a).

11. Verfahren nach einem der vorhergehenden Ansprüche, das Empfangen einer Aktualisierungsnachricht von dem Internet-Server (401) über den Internet-Dienst umfasst, wobei die Aktualisierungsnachricht mindestens eines von Folgendem umfasst:
die Blockchain-Transaktion,
eine Angabe, dass die Blockchain-Transaktion in einem Block der Blockchain veröffentlicht wurde (150), und/oder einen Merkle-Pfad zum Verifizieren, dass die Blockchain-Transaktion in dem Block der Blockchain enthalten ist (150).

12. Verfahren nach einem der vorhergehenden Ansprüche, wobei eine Ausgabe der Blockchain-Transaktion an eine Blockchain-Adresse, die mit einem der Kontakte assoziiert ist, gesperrt wird.

13. Computerimplementiertes Verfahren zum Übertragen von Blockchain-Transaktionen an ein Blockchain-Netzwerk (106), wobei das Verfahren durch einen Internet-Server (401) durchgeführt wird, der dazu ausgelegt ist, sich mit einem oder mehreren Blockchain-Knoten (104) zu verbinden, und Folgendes umfasst:
Empfangen, von einer ersten Partei (401a) über einen Internet-Dienst, der von dem Internet-Server (401) gehostet wird, mindestens eines Teils einer Blockchain-Transaktion;
Übertragen einer Blockchain-Transaktion an den einen oder die mehreren Blockchain-Knoten (106), wobei die Blockchain-Transaktion den mindestens einen Teil der Blockchain-Transaktion umfasst;
**gekennzeichnet durch** Führen einer Liste von Kontakten, die andere Parteien (402b) sind, die mit der ersten Partei (402a) assoziiert sind, wobei die Liste von Kontakten für jeden Kontakt eine oder mehrere Blockchain-Adressen umfasst, die mit diesem Kontakt assoziiert sind; und
Übertragen der Kontaktliste an die erste Partei (402a).

14. Computerausrüstung, die Folgendes umfasst:
einen Speicher, der eine oder mehrere Speichereinheiten umfasst; und
eine Verarbeitungsvorrichtung, die eine oder mehrere Verarbeitungseinheiten umfasst, wobei der Speicher Code speichert, der dazu ausgelegt ist, auf der Verarbeitungsvorrichtung ausgeführt zu werden, wobei der Code dazu ausgelegt ist, die Verarbeitungsvorrichtung zu veranlassen, das Verfahren nach einem der Ansprüche 1 bis 13 durchzuführen.

15. Computerprogramm, das auf einem computerlesbaren Speicher verkörpert und dazu ausgelegt ist, wenn es auf einer Computerausrüstung nach Anspruch 14 ausgeführt wird, das Verfahren nach einem der Ansprüche 1 bis 13 durchzuführen.

## Revendications

1. Procédé mis en œuvre par ordinateur de transmission de transactions de chaîne de blocs à un réseau de chaînes de blocs (106), dans lequel le procédé est réalisé par une première entité (402a) et comprend :
la transmission d'au moins une partie d'une transaction de chaîne de blocs à un serveur Internet (401) par l'intermédiaire d'un service Internet hébergé par le serveur Internet (401), dans lequel le serveur Internet (401) est configuré pour se connecter à un ou plusieurs nœuds (104) du réseau de chaînes de blocs (106), et pour transmettre une transaction de chaîne de blocs à l'un ou aux plusieurs nœuds de chaîne de blocs (104), dans lequel la transaction de chaîne de blocs transmise comprend l'au moins une partie de la transaction de chaîne de blocs ;
**caractérisé par** la réception, en provenance du serveur Internet (401), par l'intermédiaire du service Internet, d'une liste de contacts, qui sont d'autres entités (402b) associées à la première entité (402a), dans lequel, pour chaque contact dans la liste, la liste comprend une ou plusieurs adresses de chaîne de blocs respectives associées à ce contact.

2. Procédé de la revendication 1, dans lequel le serveur Internet (401) est un serveur de courrier, et dans lequel le service Internet est un service de courrier.

3. Procédé de la revendication 2, dans lequel l'au moins une partie de la transaction de chaîne de blocs est transmise au serveur de courrier en utilisant un protocole SMTP, Simple Mail Transfer Protocol.

4. Procédé d'une quelconque revendication précédente, dans lequel le service Internet comprend un champ d'entrée pour entrer des données, et dans lequel le procédé comprend l'entrée de l'au moins une partie de la transaction de chaîne de blocs par l'intermédiaire du champ d'entrée.

5. Procédé d'une quelconque revendication précédente, comprenant la génération de l'au moins une partie de la transaction de chaîne de blocs.

6. Procédé de quelconques des revendications 1 à 4, dans lequel l'au moins une partie de la transaction de chaîne de blocs est générée par une seconde entité (402b).

7. Procédé d'une quelconque revendication précédente, dans lequel l'au moins une partie de la transaction de chaîne de blocs comprend une signature numérique respective générée par la première entité (402a) et/ou la seconde entité (402b).

8. Procédé d'une quelconque revendication précédente, dans lequel l'au moins une partie de la transaction de chaîne de blocs est une transaction complète de chaîne de blocs.

9. Procédé d'une quelconque revendication précédente, comprenant la réception d'un message de demande en provenance du serveur Internet (401) par l'intermédiaire du service Internet, dans lequel ladite transmission de l'au moins une partie de la transaction de chaîne de blocs est en réponse à ladite réception du message de demande, et dans lequel le message de demande comprend :
une demande d'attribuer une sortie de transaction non dépensée d'une transaction de chaîne de blocs précédente à la seconde entité (402b), la demande provenant de la seconde entité (402b) ; et/ou
l'au moins une partie de la transaction de chaîne de blocs étant générée par la seconde entité (402b).

10. Procédé de quelconques des revendications 1 à 8, comprenant la transmission d'un message de demande au serveur Internet (401) par l'intermédiaire du service Internet, dans lequel ladite transmission de l'au moins une partie de la transaction de chaîne de blocs est en réponse à la réception d'une réponse au message de demande, et dans lequel le message de demande comprend :
une demande d'attribuer une sortie de transaction non dépensée d'une transaction de chaîne de blocs précédente à la première entité (402a), la demande provenant de la première entité (402a) ; et/ou
l'au moins une partie de la transaction de chaîne de blocs étant générée par la première entité (402a).

11. Procédé d'une quelconque revendication précédente, comprenant la réception d'un message de mise à jour en provenance du serveur Internet (401) par l'intermédiaire du service Internet, dans lequel le message de mise à jour comprend au moins un de :
la transaction de chaîne de blocs,
une indication que la transaction de chaîne de blocs a été publiée dans un bloc de la chaîne de blocs (150), et/ou
une voie Merkle pour vérifier que la transaction de chaîne de blocs a été incluse dans le bloc de la chaîne de blocs (150).

12. Procédé d'une quelconque revendication précédente, dans lequel une sortie de la transaction de chaîne de blocs est verrouillée sur une adresse de chaîne de blocs associée à un des contacts.

13. Procédé mis en œuvre par ordinateur de la transmission de transactions de chaîne de blocs à un réseau de chaînes de blocs (106), dans lequel le procédé est réalisé par un serveur Internet (401) configuré pour se connecter à un ou plusieurs nœuds de chaîne de blocs (104) et comprend :
la réception, en provenance d'une première entité (401a), par l'intermédiaire d'un service Internet hébergé par le serveur Internet (401), d'au moins une partie d'une transaction de chaîne de blocs ;
la transmission d'une transaction de chaîne de blocs à l'un ou aux plusieurs nœuds de chaîne de blocs (106), dans lequel la transaction de chaîne de blocs comprend l'au moins une partie de la transaction de chaîne de blocs ;
**caractérisé par** le maintien d'une liste de contacts, qui sont d'autres entités (402b) associées à la première entité (402a), dans lequel la liste de contacts comprend, pour chaque contact, une ou plusieurs adresses de chaîne de blocs associées à ce contact ; et
la transmission de la liste de contacts à la première entité (402a).

14. Équipement ordinateur, comprenant :
une mémoire comprenant une ou plusieurs unités de mémoire ; et
un appareil de traitement comprenant une ou plusieurs unités de traitement, dans lequel la mémoire stocke un code agencé pour être exécuté sur l'appareil de traitement, le code étant configuré afin d'amener l'appareil de traitement à réaliser le procédé de quelconques des revendications 1 à 13.

15. Programme d'ordinateur incorporé sur un stockage lisible par ordinateur et configuré afin, lorsqu'il est exécuté sur un équipement ordinateur de la revendication 14, de réaliser le procédé de quelconques des revendications 1 à 13.
